# EUROPEAN PATENT SPECIFICATION

(11) **EP 3 705 337 B1**
(45) Date of publication and mention of the grant of the patent: **04.03.2026**
(21) Application number: 18873331.5
(22) Date of filing: 31.05.2018
(51) Int. Cl.: H01R 11/28, B60L 58/21, B60L 58/22, H02J 7/00

(54) **CHARGING DEVICE, KIT, AND CHARGING METHOD**
LADEVORRICHTUNG, KIT UND VERFAHREN
DISPOSITIF DE CHARGE, KIT ET PROCÉDÉ

(30) Priority: 02.11.2017 CN 201711062281
(43) Date of publication of application: 09.09.2020
(73) Proprietor: NIO (Anhui) Holding Co., Ltd., Hefei City, Anhui Province (CN)
(72) Inventor: WEI, Tao, Anting, Jiading, Shangai (CN); HE, Xu, Anting, Jiading, Shangai (CN)
(74) Representative: Vossius & Partner Patentanwälte Rechtsanwälte mbB
(86) International application number: PCT/CN2018/089146
(87) International publication number: WO 2019/085456

(56) References cited:
- EP-A1- 3 057 180
- EP-A1- 3 160 790
- CN-A- 103 518 303
- CN-A- 107 294 179
- CN-A- 107 294 179
- CN-Y- 201 100 922
- CN-Y- 201 230 222
- DE-U1- 29 918 007
- FR-A1- 3 029 361
- TW-A- 201 724 691
- US-A1- 2003 117 109
- US-A1- 2017 240 059

## Description

### Technical Field

The invention relates to the field of battery pack charging of new energy vehicles, and more particularly to a method and relevant device for charging a traction battery pack (especially a high-voltage battery pack) of a new energy vehicle.

### Background Art

A battery pack, especially a high-voltage battery pack (with a 1000 V or higher voltage) is generally formed by connecting a plurality of sub-battery packs in series, and the sub-battery packs further comprise a plurality of battery cells. The voltage of the battery pack equals the product of the voltage of one single battery and the series number. During design, the battery pack is designed with one or more intermediate connectors or intermediate switches (generally known as service switches) according to actual conditions and use requirements. When the intermediate connector is taken out, the whole battery pack is divided into the plurality of lower-voltage sub-battery packs in a series connection manner, and is electrically cut off at the same time, such that positive and negative poles of the battery pack do not output voltages, and safety of the whole battery pack during maintenance is improved.

Voltage design of the battery pack takes account of the operating voltage range of an electrical actuator on one hand, and also needs to take account of the current-carrying capacity, and the insulating capability of cables used by a whole electrical system and the weight of the whole system on the other hand. Generally speaking, the higher the voltage of the battery pack is, the higher the insulating capability of the supported electrical system is, and the lower the current-carrying capacity of the cables and the weight of the whole system are. As a result, a high-power battery pack generally uses a high-voltage system.

Under the condition where a required charging voltage of the battery pack is larger than the voltage of one single charging circuit, a charging method is to connect a plurality of charging circuits in series for charging the whole battery pack. When the plurality of charging circuits are connected in series, output voltages of all the charging circuit need to be balanced and equal so as to guarantee that the charging circuits work stably. The method has the advantages that operation is simple and charging time is short, but has the disadvantage that different output voltages of the charging circuits may be caused due to different working points of the charging circuits, such that efficiency, lives and safety of the charging circuits are influenced. Another charging method is to use charging circuits suitable for the sub-battery packs to separately charge the sub-battery packs. During charging, the charging circuits are used to finish charging of the sub-battery packs one by one. The method has the advantages that charging voltages of the charging circuits are relatively low, devices are relatively low in cost and easy to purchase, and the circuits are mature, but has the disadvantages that the charging time is long and the manual operation is complicated.

US 2003/117109 describes a charging device for battery of vehicles. The charging device is connected to a power source of a typical volt hertz. The power source is connected to a high frequency source which supplies a multi-winding transformer. One of the coils known as a primary winding receives electrical energy and creates a magnetic flux in an induction core which induces a similar time varying response in the secondary windings. The secondary windings is isolated from one another and from the input core. The output coils are connected to a number of regulators respectively which convert the high frequency electrical energy back to a DC supply current at a voltage between 1.00 and 2.5 volts. The charging device of D1 is focus on charging with low voltage.

CN 107 294 179A describes a power supply assembly comprising a series switching plug, a parallel switching plug and a switching socket. The switching socket includes at least two pin sets for connection with the negative and positive poles of the target on-board battery. The series switching plug includes at least one DC conductive part, and its two ends are respectively connected with the first pin in the previous pin group and the second pin in the subsequent pin group to connect the first pin in the previous pin group and the second pin in the subsequent pin group, so as to connect at least two on-board batteries in series in turn. The power supply component has two operation states. In the discharge state (vehicle driving state), after the series switching plug is inserted into the switching socket, the DC conductor of the series switching plug is connected with the positive and negative poles of the electric vehicle, so that at least two electric vehicle batteries of an electric vehicle form a relationship in series in turn. The other state is the charging state, in which the parallel switching plug is installed so that each battery is charged in parallel.

CN 201 230 222 Y aims to provide an on-line equalization charger for series battery pack, which is used to solve the problems of under charging "single backward" and over charging "thermal out of control" in the use of battery pack, so as to relax the accuracy requirements of "pack matching", so as to achieve the purpose of long-term repair of battery and prolonging the service life of battery pack.

FR 3 029 361 A1 describes a connection device which comprises two connectors, two conductive blades, a pivot and a cover. Each connector consists of an electrically conductive metal rod housed in an electrically insulating housing element. The housing element can be molded onto the rod or the rod can be force-fitted into the housing. The connection device can be used to connect two terminals or two battery modules. The connection device is not for battery charging.

DE 299 18 007 U1 describes a housing having an opening for receiving a corresponding connection plug in the safety plug. A plurality of conductive elements are located inside the housing for conducting electricity. A protective plate is used to protect the connecting elements from being touched. A plurality of holes are formed in the protective plate, each of these holes corresponding to a connection element. An elastic device is located between the housing 1 and the protective plate and is used to press the protective plate against the opening. The elastic device comprises a plurality of elastic bodies, which are preferably springs. The plug is for the purpose of charging.

### Summary of the Invention

An object of the invention is to solve or at least alleviate the problems existing in the prior art.

The invention is specified by the independent claims. Preferred embodiments are defined in the dependent claims. In the following description, although numerous features may be designated as optional, it is nevertheless acknowledged that all features comprised in the independent claims are not to be read as optional. According to one aspect, the invention provides a stable, reliable, and easy-to-operate high-voltage battery pack charging method and device.

In one aspect of the invention, a charging device as defined in claim 1 is provided.

In another aspect, a kit with the battery pack of the new energy vehicle and the charging device is provided, the kit comprising:
the battery pack which comprises a plurality of sub-battery packs connected in series; and
the charging device of any one of claims 1 to 5 which comprises a plurality of charging circuits that are correspond to the plurality of sub-battery packs connected in series, wherein the charging connector is provided at a connection point between at least two adjacent charging circuits of the plurality of charging circuits connected in series, and a connection plug of the charging connector is connected between two corresponding sub-battery packs.

In another aspect, a method for charging the battery pack of the new energy vehicle as defined in claim 8 is further provided.

The charging device and method according to the embodiments of the invention are high in charging efficiency and stable in performance.

### Brief Description of the Drawings

The principles of the invention will become more apparent by reading the following detailed description with reference to the accompanying drawings, wherein:
FIG. 1 illustrates a schematic diagram of a charging circuit according to an embodiment;
FIG. 2 illustrates a schematic diagram of an intermediate switch socket according to an embodiment;
FIG. 3 illustrates a top side view of a charging connector according to an embodiment;
FIG. 4 illustrates a bottom side view of the charging connector according to an embodiment;
FIG. 5 illustrates an exploded diagram of the charging connector according to embodiment 1;
FIG. 6 illustrates an exploded diagram of the charging connector according to embodiment 2; and
FIG. 7 illustrates an exploded diagram of the charging connector according to embodiment 3.

### Detailed Description of Embodiments

It can be easily understood that according to technical solutions of the invention, an ordinary person skilled in the art may propose a plurality of interchangeable structures and embodiments. Therefore, the following specific embodiments and accompanying drawings are merely exemplary descriptions of the technical solutions of the invention, and should not be deemed as the entirety of the invention or deemed to define or limit the technical solutions of the invention.

Directional terms, such as up, down, left, right, front, rear, front side, rear side, top and bottom which are or may be mentioned in this description, are defined with respect to the structures shown in the accompanying drawings, and are relative concepts, and therefore may correspondingly vary depending on different positions where they are located and different use conditions. Therefore, these or other directional terms should not be explained as limiting terms.

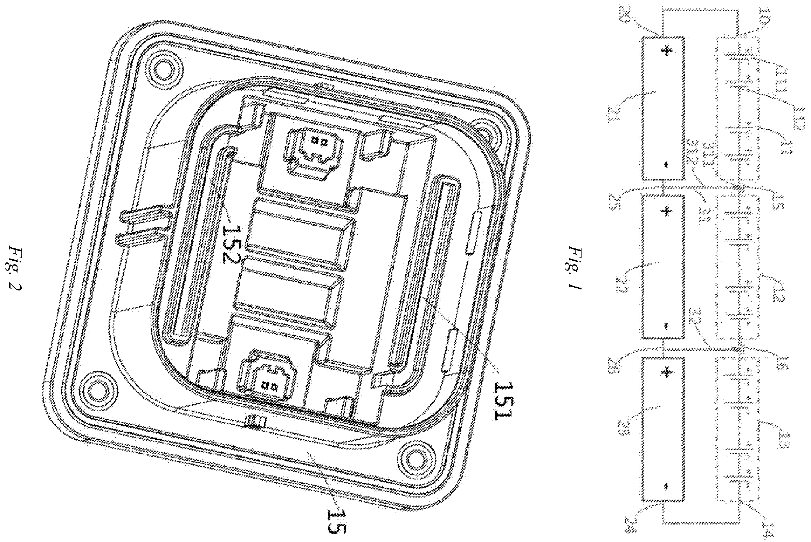

With reference to FIG. 1, it illustrates a circuit diagram according to an embodiment of a charging method of the invention. A traction battery pack of a new energy vehicle comprises a plurality of sub-battery packs 11, 12, 13 connected in series. Each of the sub-battery packs comprises battery cells 111, 112 connected in series, intermediates switches are arranged between the sub-battery packs, and the intermediate switches comprise intermediate switch sockets 15, 16 and intermediate switch plugs (which are removed during charging). The intermediate switch plugs are mounted in the intermediate switch sockets 15, 16 in a normal state such that the sub-battery packs 11, 12, 13 are connected in series, and are removed when the battery pack is inspected or maintained. Due to the fact that the sub-battery packs 11, 12, 13 have a high voltage such as 1000 V when connected in series, it is difficult to adopt one single charging circuit and the cost is high. Therefore, a plurality of charging circuits 21, 22, 23, connected in series, corresponding to the plurality of sub-battery packs 11, 12, 13 connected in series are adopted in the embodiments. During charging, two poles 20, 24 of each of the plurality of charging circuits connected in series are connected to two poles 10, 14 of each of the plurality of sub-battery packs connected in series. Furthermore, connection points 25, 26 of adjacent charging circuits are connected between corresponding adjacent sub-battery packs, namely between the sub-battery packs 11 and 12 and between the sub-battery packs 12 and 13. It should be understood that only the three sub-battery packs and the three charging circuits are exemplarily illustrated in the figures, and the number of the sub-battery packs and the number of the charging circuits are variable in other embodiments.

In some embodiments, charging connectors 31, 32 to be described below in details according to embodiments of the invention are utilized to be connected to the intermediate switch sockets 15, 16 between corresponding adjacent sub-battery packs so as to enable the connection point between adjacent charging circuits to be connected between the corresponding adjacent sub-battery packs. Each of the charging connectors 31, 32 comprises a connection wire 312 led out from the charging circuit connection point and a connection plug 311 connected to the connection wire 312. By means of the method of the invention, a series potential point of the sub-battery packs and a charging circuit series potential point of the charging circuits are connected through the connection wire, such that the series potential point of the sub-battery packs and the charging circuit series potential point are concurrent, and it is guaranteed that output voltages of all the charging circuit are balanced and equal, and the charging circuits work stably. In addition, the invention utilizes the intermediate switches provided on the battery pack to realize the above functions, such that connection operation during a charging process becomes more convenient.

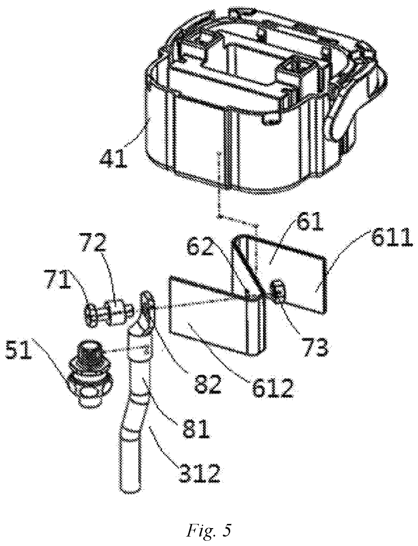

Then, specific structures of the charging connector and the corresponding intermediate switch socket are described with reference to FIGs. 2 to 5. The charging connector for the battery pack of the new energy vehicle comprises: the connection wire 312 connected to the connection point 25 between two adjacent charging circuits 21, 22; and the connection plug 311 connected to the connection wire 312 and provided with a first connection terminal 611 and a second connection terminal 612 which are connected to the connection wire 312, wherein the connection plug 311 is capable of being connected between the two adjacent sub-battery packs 11, 12 so as to enable the two adjacent sub-battery packs 11, 12 to be electrically connected to each other and to be electrically connected to the connection wire 312. In some embodiments, the connection plug 311 is connected to the intermediate switch socket 15 between the two adjacent sub-battery packs 11, 12. As shown in FIG. 2, the intermediate switch socket 15 has the characteristic of being matched with the first connection terminal and the second connection terminal, a pair of opposite insertion grooves 151 and 152 with flat springs are arranged, these insertion grooves correspond to the first connection terminal and the second connection terminal, and the insertion grooves 151 and 152 are capable of being arranged in parallel. Furthermore, the intermediate switch socket 15 further has other characteristics of being used for being matched with the connection plug 311. In an alternative embodiment, a connection plug 311 is connected to a wire of another form between the two adjacent sub-battery packs 11, 12.

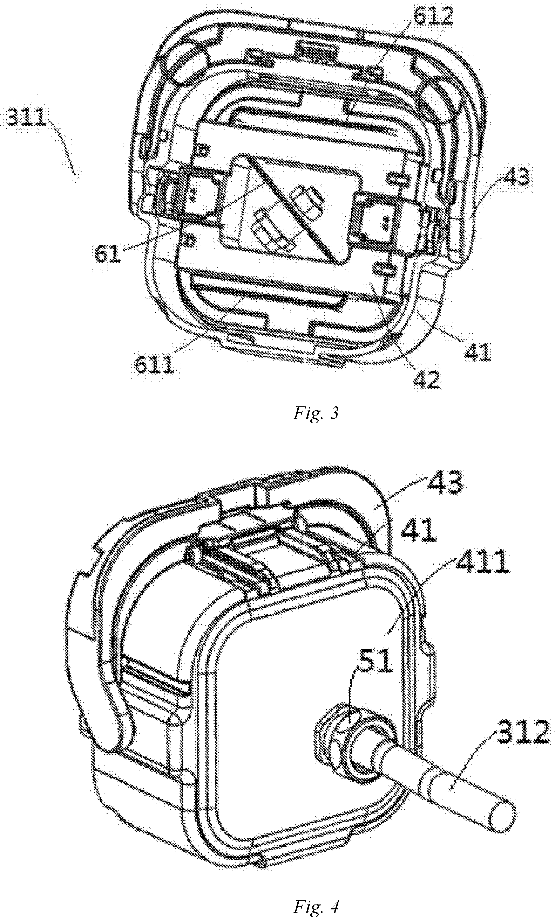

Embodiment 1 of the charging connector is described with reference to FIGs. 3 to 5, a connection plug 311 comprises a shell 41, a conducting strip 61 inside the shell 41, an embedded fixed member 42 for keeping the conducting strip 61 in place, and an operation handle 43 enabling the connection plug 311 to be matched with a corresponding intermediate switch socket. A first connection terminal 611 and a second connection terminal 612 at a first end of the shell 41 are exposed.

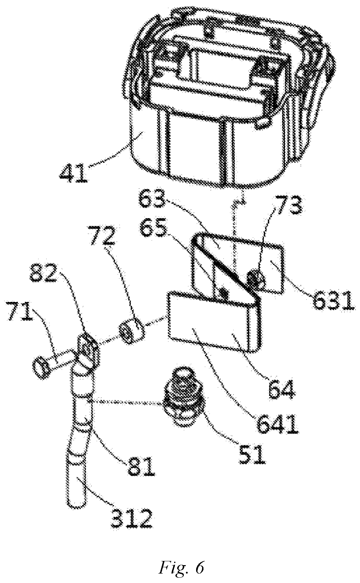

In some embodiments, the conducting strip 61 adopts a Z shape, the Z-shaped conducting strip is formed by bending two ends 611, 612 of sheet metal towards opposite directions, the two bent ends 611, 612 of the sheet metal constitute the first connection terminal and the second connection terminal, and the middle of the sheet metal is provided with a connection hole 62 which is arranged in the middle of the shell of the connection plug. The connection wire 312 is provided with a wire main body 81 and a wire connection terminal 82. In this embodiment, the wire connection terminal 82 is provided with a holed structure with a flat front end, a bolt 71 sequentially penetrates a bush 72, the wire connection terminal 82 and the connection hole 62 in the middle of the conducting strip 61 and is received by a nut 73 so as to be connected to the conducting strip 61. Then, the conducting strip with the connection wire is inserted into a notch in the shell and is kept in placed through the embedded fixed member 42, such that two ends of the conducting strip are both exposed and constitute the first connection terminal 611 and the second connection terminal 612. Furthermore, a bottom cover 411 of the other end of the shell 41 is provided with an opening, and a cable gland 51 is sleeved on the wire main body 81 and is fixed to the bottom cover 411 provided with the opening. The cable gland 51 is made from insulating materials such as plastic and is used for fixing the connection wire to the shell, and realizing insulation of a wire terminal from an outside contactable part. FIG. 6 illustrates embodiment 2 of the charging connector. Compared with the embodiments of FIGs. 2 to 4, a conducting strip in FIG. 6 comprises a first V-shaped conducting strip 63 and a second V-shaped conducting strip 64, the first V-shaped conducting strip 63 and the second V-shaped conducting strip 64 are arranged in corresponding notches of a shell to enable one end 631 of the first V-shaped conducting strip 63 to constitute a first connection terminal and enable one end 641 of the second V-shaped conducting strip 64 to constitute a second connection terminal, and the other end of the first V-shaped conducting strip 63 and the other end of the second V-shaped conducting strip 64 are overlapped and are connected to a connection wire 312. More specifically, the other end of the first V-shaped conducting strip 63 and the other end of the second V-shaped conducting strip 64 are provided with connection holes 65, the connection wire 312 is similarly connected to the two conducting strips through a bolt, and the two conducting strips and the connection wire are enabled to be connected together.

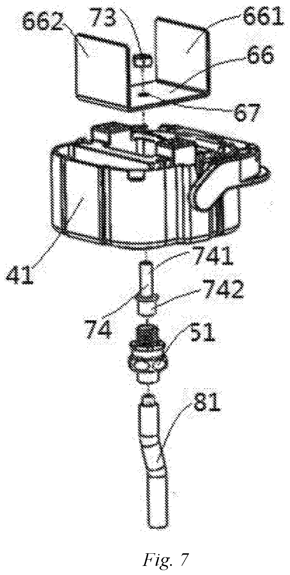

FIG. 7 illustrates embodiment 3 of the charging connector, and a U-shaped conducting strip 66 is adopted in this embodiment. The U-shaped conducting strip 66 is formed by bending two ends of sheet metal towards the same direction, the two bent ends 661, 662 of the sheet metal constitute a first connection terminal and a second connection terminal, and the middle of the sheet metal is provided with a connection hole 67, which is arranged in the middle of a shell of a connection plug and is connected to a connection wire. When the conducting strip 66 is inserted into a groove of the shell, the two ends 661, 662 of the U-shaped conducting strip constitute the first connection terminal and the second connection terminal respectively, a threaded first end 741 of a contact bolt 74 is matched with a nut 73 so as to be connected to the middle connection hole 67 of the U-shaped conducting strip 66, and the other end 742 of the contact bolt 74 is connected to the connection wire 312. The other end 742 of the contact bolt 74 is connected with the connection wire 312 by means of pressing, riveting, welding or the like.

In another aspect, the invention provides a charging device for a battery pack of a new energy vehicle, the charging device comprising: a plurality of charging circuits connected in series, wherein a charging connector according to various embodiments is provided at a connection point between at least two adjacent charging circuits of the plurality of charging circuits connected in series.

In another aspect, the invention provides a kit with a battery pack of a new energy vehicle and a charging device, the kit comprising: the battery pack which comprises a plurality of sub-battery packs connected in series; and the charging device which comprises a plurality of charging circuits that are connected in series and correspond to the plurality of sub-battery packs connected in series, wherein the charging connector according to various embodiments of the invention is provided at a connection point between at least two adjacent charging circuits of the plurality of charging circuits connected in series, and a connection plug of the charging connector is connected between two corresponding sub-battery packs. Intermediate switches are arranged between the plurality of sub-battery packs connected in series, each of the intermediate switches is provided with an intermediate switch plug and an intermediate switch socket, and in a charging process, the connection plugs of the charging connectors replace the intermediate switch plugs to be connected to the corresponding intermediate switch socket.

The charging connector of the invention may be obtained by simply modifying existing intermediate switch plugs, which improves the charging efficiency and charging stability of high-voltage battery packs connected in series.

## Claims

1. A charging device for a battery pack of a new energy vehicle, the charging device comprising:
a plurality of charging circuits (21, 22, 23) connected in series comprising two poles (20, 24) and a connection point (25, 26) between at least two adjacent charging circuits (21, 22, 23),
a charging connector (31, 32) provided at the connection point (25, 26), the charging connector (31, 32) comprises:
a connection wire (312) connected to the connection point (25, 26) between the two adjacent charging circuits (21, 22, 23); and
a connection plug (311) connected to the connection wire (312) and provided with a first connection terminal (611) and a second connection terminal (612) which are connected to the connection wire (312), wherein the connection plug (311) is capable of being connected between two adjacent sub-battery packs (11, 12, 13) so as to enable the two adjacent sub-battery packs (11, 12, 13) to be electrically connected to each other and to be electrically connected to the connection wire (312);
**characterized in that** the connection plug (311) comprises a shell (41), a conducting strip (61) inside the shell (41) and an embedded fixed member (42) used for keeping the conducting strip (61) in place;
two ends of the conducting strip (61) constitute the first connection terminal (611) and the second connection terminal (612), and the connection wire (312) is connected to the middle of the conducting strip (61).

2. The charging device according to claim 1, wherein the connection plug (311) is adapted to be connected to an intermediate switch socket (15, 16) between the two adjacent sub-battery packs (11, 12, 13).

3. The charging device according to claim 1, wherein the conducting strip is U-shaped, the U-shaped conducting strip (66) is formed by bending two ends of sheet metal towards the same direction, the two bent ends (661, 662) of the sheet metal constitute the first connection terminal (611) and the second connection terminal (612), and the middle of the sheet metal is arranged in the middle of the shell (41) of the connection plug (311) and is connected to the connection wire (312).

4. The charging device according to claim 1, wherein the conducting strip is Z-shaped, the Z-shaped conducting strip is formed by bending two ends of sheet metal towards opposite directions, the two bent ends (611, 612) of the sheet metal constitute the first connection terminal and the second connection terminal, and the middle of the sheet metal is arranged in the middle of the shell of the connection plug (311) and is connected to the connection wire (312).

5. The charging device according to claim 1, wherein the conducting strip (61) is provided with a connection hole (65), and the connection wire (312) is fixed to the conducting strip through a bolt.

6. A kit with a battery pack of a new energy vehicle and a charging device, the kit comprising:
the battery pack which comprises a plurality of sub-battery packs (11, 12, 13) connected in series; and
the charging device of any one of claims 1 to 5 which comprises a plurality of charging circuits that are correspond to the plurality of sub-battery packs (11, 12, 13) connected in series, wherein the charging connector is provided at a connection point between at least two adjacent charging circuits of the plurality of charging circuits connected in series, and a connection plug of the charging connector is connected between two corresponding sub-battery packs (11, 12, 13).

7. The kit with the battery pack of the new energy vehicle and the charging device according to claim 6 wherein intermediate switches are arranged between the plurality of sub-battery packs (11, 12, 13) connected in series, each of the intermediate switches is provided with an intermediate switch plug and an intermediate switch socket (15, 16), and in a charging process, the connection plugs (311) of the charging connectors replace the intermediate switch plugs to be connected to the corresponding intermediate switch sockets (15, 16).

8. A method for charging a battery pack of a new energy vehicle, the battery pack comprising a plurality of sub-battery packs (11, 12, 13) connected in series, the method comprising:
providing a charging device of any one of claims 1 to 5 comprising a plurality of charging circuits (21, 22, 23) that are connected in series and correspond to the plurality of sub-battery packs (11, 12, 13) connected in series;
connecting two poles (20, 24) of the plurality of charging circuits (21, 22, 23) connected in series to two poles (20, 24) of the plurality of sub-battery packs (11, 12, 13) connected in series; and
connecting connection points of adjacent charging circuits (21, 22, 23) between corresponding adjacent sub-battery packs (11, 12, 13) by connecting the charging connectors of the charging device between corresponding adjacent sub-battery packs (11, 12, 13).

9. The method for charging the battery pack according to claim 8, the method further comprising: connecting the charging connectors to an intermediate switch socket (15, 16) between the corresponding adjacent sub-battery packs (11, 12, 13).

## Patentansprüche

1. Ladevorrichtung für einen Batteriepack eines Fahrzeugs mit alternativem Antrieb, die Ladevorrichtung umfassend:
eine Vielzahl von in Reihe geschalteten Ladeschaltungen (21, 22, 23), umfassend zwei Pole (20, 24) und einen Anschlusspunkt (25, 26) zwischen mindestens zwei benachbarten Ladeschaltungen (21, 22, 23),
einen Ladeverbinder (31, 32), der an dem Anschlusspunkt (25, 26) bereitgestellt ist, der Ladeverbinder (31, 32) umfassend:
einen Anschlussdraht (312), der mit dem Anschlusspunkt (25, 26) zwischen den zwei benachbarten Ladeschaltungen (21, 22, 23) verbunden ist; und
einen Anschlussstecker (311), der mit dem Anschlussdraht (312) verbunden und mit einer ersten Anschlussklemme (611) und einer zweiten Anschlussklemme (612), die mit dem Anschlussdraht (312) verbunden sind, versehen ist, wobei der Anschlussstecker (311) in der Lage ist, zwischen zwei benachbarten Unterbatteriepacks (11, 12, 13) verbunden zu werden, um zu ermöglichen, dass die zwei benachbarten Unterbatteriepacks (11, 12, 13) elektrisch miteinander verbunden werden und elektrisch mit dem Anschlussdraht (312) verbunden werden;
**dadurch gekennzeichnet, dass** der Anschlussstecker (311) ein Gehäuse (41), einen Leiterstreifen (61) innerhalb des Gehäuses (41) und ein eingebettetes festes Element (42), das verwendet wird, um den Leiterstreifen (61) positioniert zu halten, umfasst;
zwei Enden des Leiterstreifens (61) die erste Anschlussklemme (611) und die zweite Anschlussklemme (612) bilden und der Anschlussdraht (312) mit der Mitte des Leiterstreifens (61) verbunden ist.

2. Ladevorrichtung nach Anspruch 1, wobei der Anschlussstecker (311) angepasst ist, um mit einer Zwischenschalterbuchse (15, 16) zwischen den zwei benachbarten Unterbatteriepacks (11, 12, 13) verbunden zu werden.

3. Ladevorrichtung nach Anspruch 1, wobei der Leiterstreifen U-förmig ist, der U-förmige Leiterstreifen (66) durch Biegen von zwei Enden aus Blech in dieselbe Richtung gebildet wird, die zwei gebogenen Enden (661, 662) des Blechs die erste Anschlussklemme (611) und die zweite Anschlussklemme (612) bilden und die Mitte des Blechs in der Mitte des Gehäuses (41) des Anschlusssteckers (311) angeordnet ist und mit dem Anschlussdraht (312) verbunden ist.

4. Ladevorrichtung nach Anspruch 1, wobei der Leiterstreifen Z-förmig ist, der Z-förmige Leiterstreifen durch Biegen von zwei Enden aus Blech in entgegengesetzte Richtungen gebildet wird, die zwei gebogenen Enden (611, 612) des Blechs die erste Anschlussklemme und die zweite Anschlussklemme bilden und die Mitte des Blechs in der Mitte des Gehäuses des Anschlusssteckers (311) angeordnet ist und mit dem Anschlussdraht (312) verbunden ist.

5. Ladevorrichtung nach Anspruch 1, wobei der Leiterstreifen (61) mit einem Anschlussloch (65) versehen ist und der Anschlussdraht (312) durch einen Bolzen am Leiterstreifen befestigt ist.

6. Kit mit einem Batteriepack eines Fahrzeugs mit alternativem Antrieb und einer Ladevorrichtung, das Kit umfassend:
den Batteriepack, der eine Vielzahl von in Reihe geschalteten Unterbatteriepacks (11, 12, 13) umfasst; und
die Ladevorrichtung nach einem der Ansprüche 1 bis 5, die eine Vielzahl von Ladeschaltungen umfasst, die der Vielzahl von in Reihe geschalteten Unterbatteriepacks (11, 12, 13) entsprechen, wobei der Ladeverbinder an einem Anschlusspunkt zwischen mindestens zwei benachbarten Ladeschaltungen der Vielzahl von in Reihe geschalteten Ladeschaltungen bereitgestellt ist und ein Anschlussstecker des Ladeverbinders zwischen zwei entsprechenden Unterbatteriepacks (11, 12, 13) verbunden ist.

7. Kit mit dem Batteriepack des Fahrzeugs mit alternativem Antrieb und Ladevorrichtung nach Anspruch 6, wobei Zwischenschalter zwischen der Vielzahl von in Reihe geschalteten Unterbatteriepacks (11, 12, 13) angeordnet sind, jeder der Zwischenschalter mit einem Zwischenschalterstecker und einer Zwischenschalterbuchse (15, 16) versehen ist, und, in einem Ladeprozess, die Anschlussstecker (311) der Ladeverbinder die Zwischenschalterstecker, die mit den entsprechenden Zwischenschalterbuchsen (15, 16) verbunden werden sollen, ersetzen.

8. Verfahren zum Laden eines Batteriepacks eines Fahrzeugs mit alternativem Antrieb, der Batteriepack umfassend eine Vielzahl von in Reihe geschalteten Unterbatteriepacks (11, 12, 13), das Verfahren umfassend:
Bereitstellen einer Ladevorrichtung nach einem der Ansprüche 1 bis 5, umfassend eine Vielzahl von Ladeschaltungen (21, 22, 23), die in Reihe geschaltet sind und der Vielzahl von in Reihe geschalteten Unterbatteriepacks (11, 12, 13) entsprechen;
Verbinden von zwei Polen (20, 24) der Vielzahl von in Reihe geschalteten Ladeschaltungen (21, 22, 23) mit zwei Polen (20, 24) der Vielzahl von in Reihe geschalteten Unterbatteriepacks (11, 12, 13) und
Verbinden von Anschlusspunkten benachbarter Ladeschaltungen (21, 22, 23) zwischen entsprechenden benachbarten Unterbatteriepacks (11, 12, 13) durch Verbinden der Ladeverbinder der Ladevorrichtung zwischen entsprechenden benachbarten Unterbatteriepacks (11, 12, 13).

9. Verfahren zum Laden des Batteriepacks nach Anspruch 8, das Verfahren ferner umfassend: Verbinden der Ladeverbinder mit einer Zwischenschalterbuchse (15, 16) zwischen den entsprechenden benachbarten Unterbatteriepacks (11, 12, 13).

## Revendications

1. Dispositif de charge pour un bloc-batterie d'un véhicule à énergie nouvelle, le dispositif de charge comprenant :
une pluralité de circuits de charge (21, 22, 23) connectés en série comprenant deux pôles (20, 24) et un point de connexion (25, 26) entre au moins deux circuits de charge (21, 22, 23) adjacents,
un connecteur de charge (31, 32) fourni au niveau du point de connexion (25, 26), le connecteur de charge (31, 32) comprenant :
un fil de connexion (312) connecté au point de connexion (25, 26) entre les deux circuits de charge (21, 22, 23) adjacents ; et
une fiche de connexion (311) connectée au fil de connexion (312) et pourvue d'une première borne de connexion (611) et d'une seconde borne de connexion (612) qui sont connectées au fil de connexion (312), dans lequel la fiche de connexion (311) peut être connectée entre deux sous-blocs-batteries (11, 12, 13) adjacents de manière à permettre aux deux sous-blocs-batteries (11, 12, 13) adjacents d'être connectés électriquement l'un à l'autre et d'être connectés électriquement au fil de connexion (312) ;
**caractérisé en ce que** la fiche de connexion (311) comprend une enveloppe (41), une bande conductrice (61) à l'intérieur de l'enveloppe (41) et un élément fixe intégré (42) utilisé pour garder la bande conductrice (61) en place ;
deux extrémités de la bande conductrice (61) constituent la première borne de connexion (611) et la seconde borne de connexion (612), et le fil de connexion (312) est connecté au milieu de la bande conductrice (61).

2. Dispositif de charge selon la revendication 1, dans lequel la fiche de connexion (311) est adaptée pour être connectée à une prise de commutation intermédiaire (15, 16) entre les deux sous-blocs-batteries (11, 12, 13) adjacents.

3. Dispositif de charge selon la revendication 1, dans lequel la bande conductrice est en forme de U, la bande conductrice en forme de U (66) est formée en pliant deux extrémités d'une feuille métallique vers la même direction, les deux extrémités pliées (661, 662) de la feuille métallique constituent la première borne de connexion (611) et la seconde borne de connexion (612), et le milieu de la feuille métallique est agencé au milieu de l'enveloppe (41) de la fiche de connexion (311) et est connecté au fil de connexion (312).

4. Dispositif de charge selon la revendication 1, dans lequel la bande conductrice est en forme de Z, la bande conductrice en forme de Z est formée en pliant deux extrémités d'une feuille métallique vers des directions opposées, les deux extrémités pliées (611, 612) de la feuille métallique constituent la première borne de connexion et la seconde borne de connexion, et le milieu de la feuille métallique est agencé au milieu de l'enveloppe de la fiche de connexion (311) et est connecté au fil de connexion (312).

5. Dispositif de charge selon la revendication 1, dans lequel la bande conductrice (61) est pourvue d'un trou de connexion (65), et le fil de connexion (312) est fixé à la bande conductrice par l'intermédiaire d'un boulon.

6. Kit avec un bloc-batterie d'un véhicule à énergie nouvelle et un dispositif de charge, le kit comprenant :
le bloc-batterie qui comprend une pluralité de sous-blocs-batteries (11, 12, 13) connectés en série ; et
le dispositif de charge selon l'une quelconque des revendications 1 à 5 qui comprend une pluralité de circuits de charge qui correspondent à la pluralité de sous-blocs-batteries (11, 12, 13) connectés en série, dans lequel le connecteur de charge est fourni au niveau d'un point de connexion entre au moins deux circuits de charge adjacents de la pluralité de circuits de charge connectés en série, et une fiche de connexion du connecteur de charge est connectée entre deux sous-blocs-batteries (11, 12, 13) correspondants.

7. Kit avec le bloc-batterie du véhicule à énergie nouvelle et le dispositif de charge selon la revendication 6, dans lequel des commutateurs intermédiaires sont agencés entre la pluralité de sous-blocs-batteries (11, 12, 13) connectés en série, chacun des commutateurs intermédiaires est pourvu d'une fiche de commutation intermédiaire et d'une prise de commutation intermédiaire (15, 16), et dans un processus de charge, les fiches de connexion (311) des connecteurs de charge remplacent les fiches de commutation intermédiaires destinées à être connectées aux prises de commutation intermédiaires (15, 16) correspondantes.

8. Procédé de charge d'un bloc-batterie d'un véhicule à énergie nouvelle, le bloc-batterie comprenant une pluralité de sous-blocs-batteries (11, 12, 13) connectés en série, le procédé comprenant :
la fourniture d'un dispositif de charge selon l'une quelconque des revendications 1 à 5 comprenant une pluralité de circuits de charge (21, 22, 23) qui sont connectés en série et correspondent à la pluralité de sous-blocs-batteries (11, 12, 13) connectés en série ;
la connexion de deux pôles (20, 24) de la pluralité de circuits de charge (21, 22, 23) connectés en série à deux pôles (20, 24) de la pluralité de sous-blocs-batteries (11, 12, 13) connectés en série ; et
la connexion de points de connexion de circuits de charge (21, 22, 23) adjacents entre des sous-blocs-batteries (11, 12, 13) adjacents correspondants en connectant les connecteurs de charge du dispositif de charge entre des sous-blocs-batteries (11, 12, 13) adjacents correspondants.

9. Procédé de charge du bloc-batterie selon la revendication 8, le procédé comprenant en outre : la connexion des connecteurs de charge à une prise de commutation intermédiaire (15, 16) entre les sous-blocs-batteries (11, 12, 13) adjacents correspondants.
